Europäisches Patentamt

European Patent Office

Office européen des brevets

(19)

(11)     EP 0 872 206 B1

(12)                     **EUROPEAN PATENT SPECIFICATION**

(45) Date of publication and mention        (51) Int Cl.⁷: **A47L 13/16**
of the grant of the patent:
**05.07.2000   Bulletin 2000/27**

(21) Application number: **98106849.7**

(22) Date of filing: **15.04.1998**

(54) **Cleaning sheet**

Reinigungsblatt

Feuille de nettoyage

(84) Designated Contracting States:
**DE ES FR GB IT NL**

• **Ishikawa, Kenji, c/o Kao Corporation
Haga-gun, Tochigi-ken (JP)**

(30) Priority: **17.04.1997   JP 10067897**

(74) Representative: **Grünecker, Kinkeldey,
Stockmair & Schwanhäusser Anwaltssozietät
Maximilianstrasse 58
80538 München (DE)**

(43) Date of publication of application:
**21.10.1998   Bulletin 1998/43**

(73) Proprietor: **KAO CORPORATION
Chuo-ku, Tokyo (JP)**

(56) References cited:
**US-A- 4 144 370          US-A- 5 525 397**

(72) Inventors:
• **Shizuno, Akihito, c/o Kao Corporation
Haga-gun, Tochigi-ken (JP)**

• **PATENT ABSTRACTS OF JAPAN vol. 016, no.
329 (C-0963), 17 July 1992 & JP 04 096724 A (KAO
CORP), 30 March 1992,**

**Description**

Field of the Invention

This invention relates to a cleaning sheet for business and domestic uses, which comprises a network sheet and nonwoven fabric entangled together. More particularly, it relates to a dry-type cleaning sheet in which a nonwoven fiber aggregate mainly comprising a specific fiber is used as the nonwoven fabric so as to collect various kinds of dust. The cleaning sheet of the present invention is particularly effective when attached exchangeably to a floor cleaning tool or a handy type cleaning tool.

Description of Related Art

The present applicant previously proposed a cleaning sheet comprising nonwoven fabric formed by entanglement of fibers and a network sheet that reinforces the nonwoven fabric, which has such freedom of fibers as to collect dust including large dust, such as lint, waste pieces of fibers and hairs, as well as fine dust, such as soil dust, while retaining sufficient strength necessary for a cleaning operation, and which can be used in floor cleaning mop of sheet-exchangable type to collect various kinds of dust (see JP-A-7 184 815 or corresponding US-A-5 525 397).

Although the above cleaning sheet has high performance in collecting lint, hairs, etc. on such floor materials as wood flooring, soft flooring and *tatami*, it has insufficient dust collecting performance when used on a smooth surface of certain flooring or veneering, resin-coated desks or furniture, and plastic products.

JP-A-04 096 724, filed by the applicant, discloses a cleaning article comprising entangled nonwoven fabric fabricated of ultrafine fibers having a fineness of less than 0.8 denier and fibers of 0.8 denier or greater in random arrangement at a weight ratio of 99/1 to 1/99. According to the disclosure, the cleaning article is capable of collecting fine dust such as soil dust without using a lubricant and also entangling hairs and large dust without increasing the coefficient of friction with the surface to be cleaned.

However, because the above-described cleaning article is composed of only two kinds of fibers, if the degree of fiber entanglement is reduced for ensuring dust collecting performance, sufficient strength cannot be obtained. In case of obtaining sufficient strength, the fibers must be densely entangled, which results in poor performance in collecting various kinds of dust.

SUMMARY OF THE INVENTION

An object of the present invention is to provide a cleaning sheet which satisfies both the requirements, with respect to the strength necessary for a cleaning operation and the degree of freedom of the constituent fibers required for dust collecting performance. More specifically, the object is to provide a cleaning sheet capable of collecting various kinds of dust, including not only dust on general flooring but dust on desks, furniture and plastic products with a smooth surface, especially a cleaning sheet which is effectively used with a cleaning tool to which a cleaning sheet is exchangeably attached.

The present inventors have conducted extensive studies and found as a result that the above object is accomplished by a sheet obtained by overlaying a fiber web containing a specific amount of ultrafine fibers having not more than a specific fineness on a network sheet and forming them into a unitary body by entanglement by water jet, for example, water needling, under a low energy condition,.

Having been completed based on the above finding, the present invention provides a cleaning sheet comprising a network sheet having on one side or both sides thereof a nonwoven fiber aggregate formed by entanglement of fibers of a fiber web having 50% by weight or more of ultrafine fibers having a fineness of not more than 0.9 denier, the fibers of the nonwoven fiber aggregate being further entangled with the network sheet thereby forming a unitary body, in addition to the entanglement of the fibers themselves.

In the above-described preferred embodiment, the fiber aggregate has a low degree of entanglement allowing the constituent fibers to have such freedom that the fibers are capable of entangling fibrous dust and holding the entangled dust among themselves.

The cleaning sheet according to the present invention satisfies both the requirements with respect to the strength necessary for a cleaning operation and the degree of freedom of fibers necessary for dust collection. Specifically, the cleaning sheet of the present invention is capable of collecting various kinds of dust, including the dust on general flooring and the dust on desks, furniture and plastic products with a smooth surface, and is particularly effective when used with a cleaning tool to which a cleaning sheet is exchangeably attached.

BRIEF DESCRIPTION OF THE DRAWINGS

Fig. 1 is an enlarged sectional view showing an embodiment of the cleaning sheet according to the present invention.

Fig. 2 is an enlarged plan view of a network sheet used in the cleaning sheet shown in Fig. 1.

Fig. 3 is a graph showing a stress-strain curve.

DESCRIPTION OF THE EMBODIMENT

The cleaning sheet of the present invention will be described in detail with reference to its preferred embodiment.

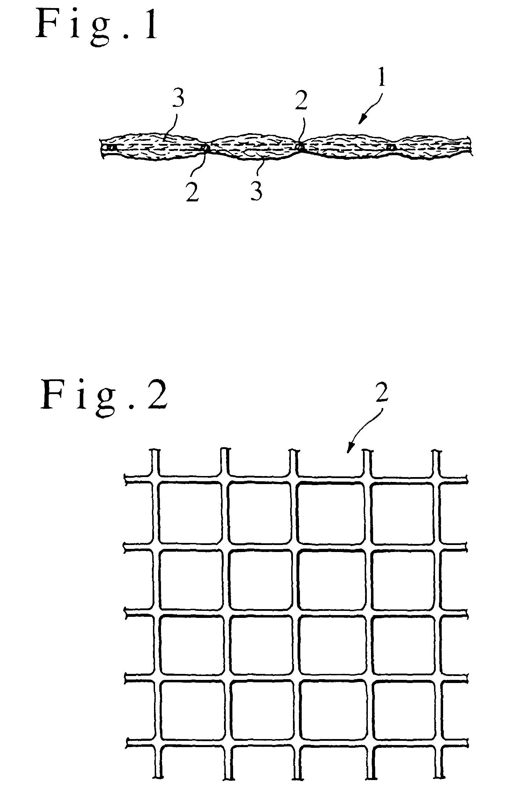

Fig. 1 is an enlarged sectional view showing an embodiment of the cleaning sheet according to the present invention, and Fig. 2 is an enlarged plan view of a network sheet used in the cleaning sheet of Fig. 1.

As shown in Fig. 1, a cleaning sheet 1 of this embodiment comprises a network sheet 2 shown in Fig. 2 and a nonwoven fiber aggregate 3, which is formed by entanglement of the fibers of a fiber web, disposed on each side of the network sheet 2. The fibers constituting the fiber aggregate 3 are entangled not only among themselves but with the network sheet 2 to provide a unitary body.

The network sheet 2 in the cleaning sheet 1 has a net structure of lattice pattern as shown in Fig. 2. The fibers making the network sheet 2 preferably have a diameter of 20μm to 500 μm, still preferably 100μm to 200 μm. The distance between the fibers is preferably 2mm to 30 mm, still preferably 4 mm to 20 mm.

The material of the network sheet 2 is selected appropriately from among polyolefins, such as polyethylene, polypropylene and polybutene; polyesters such as polyethylene terephthalate and polybutylene terephthalate; polyamides such as nylon 6 and nylon 66; acrylonitriles; vinyl polymers and vinylidene polymers such as polyvinyl chloride and polyvinylidene chloride; and modified polymers, alloys or mixtures thereof.

A perforated film having a number of perforations is also useful as the network sheet of the cleaning sheet of the present invention. The network sheet to be used in the present invention is not particularly limited as long as it has certain holes or perforations and has the function as a support with which the fiber web forming the fiber aggregate may be entangled to form a unitary body. For example, useful network sheets may be open weave fabric (i.e., woven fabric having relatively large interstices) such as gauze-like fabric, and nonwoven fabric having interstices that allow a fiber web overlaid upon one or both sides thereof to be entangled therewith to form a unitary body.

The fiber aggregate 3 in the cleaning sheet 1 in this embodiment has a nonwoven structure formed by entangling the fibers of a fiber web containing 50% by weight or more of ultrafine fibers having a fineness of not more than 0.9 denier. The content of the ultrafine fibers in the fiber web (the fiber aggregate) should be at least 50% by weight and is preferably 70% by weight or more, still preferably 90% by weight or more. If the content of the ultrafine fibers is less than 50% by weight, the dust collecting performance attributed to the ultrafine fibers is reduced. The ultrafine fibers preferably have a fineness of 0.8 denier or less, still preferably 0.5 denier or less, and a fiber length of 20 to 100 mm, still preferably 30 to 65 mm. The cross-sectional shape, the crimping ratio, and the like of the ultrafine fibers should be determined taking processability and cost into consideration.

While the cleaning sheet according to the above-described embodiment has a fiber aggregate overlaid upon and entangled with both sides of the network sheet, an embodiment in which the network sheet has a fiber aggregate on one side thereof also comes under the scope of the present invention.

Fibers which constitute the fiber web (the fiber aggregate) in combination with the ultrafine fibers are preferably those having a fiber fineness of 1.0 to 6.0 denier and a length of 20 to 100 mm, still preferably those having a fineness of 1.0 to 3.0 denier and a length of 30 to 65 mm.

The fibers used in the fiber aggregate 3 may be selected from, for example, thermoplastic fibers such as polyesters and polyamides; composite fibers thereof; semi-synthetic fibers such as acetate fiber; regenerated fibers such as cupra and rayon; and natural fibers such as cotton; and blends of cotton and other fibers.

To improve the surface physical properties of the nonwoven fiber aggregate, a lubricant, etc. which can absorb dust may be added. It is preferred that the amount of the lubricant applied be controlled so as not to ooze out considerably through the fiber aggregate nor to migrate considerably to the surface to be cleaned.

The fiber aggregate fabricated mainly of ultrafine fibers of 0.9 denier or finer performs an improved function of entangling large dust, especially hairs, and prevents a lubricant or the like, if applied, from oozing out and migrating considerably to the surface to be cleaned. As a result, an increased amount of a lubricant can be added, which leads to further improved dust adsorption.

It is preferred that the nonwoven fiber aggregate to has a basis weight of from 30 to 100 g/m$^2$, still preferably 40 to 70 g/m$^2$. If the basis weight is smaller than 30 g/m$^2$, the dust adsorbed onto the cleaning sheet easily passes through the back side of the sheet to stain hands, etc. during a cleaning operation. If the basis weight is larger than 100 g/m$^2$, the fibers and the network sheet will not be sufficiently entangled with each other at a desired entanglement coefficient hereinafter defined. As a result, the processability is deteriorated, and the fibers easily fall off the cleaning sheet.

It is preferred that the nonwoven fiber aggregate has a density of 0.015 to 0.200 $g/cm^3$, still preferably 0.030 to 0.100 $g/cm^3$. If the density is smaller than 0.015 $g/cm^3$, the degree of entanglement among fibers is too low. If it exceeds 0.200 $g/cm^3$, the degree of entanglement among fibers is too high, and the interstices among fibers become too small.

The degree of entanglement among constituent fibers of the fiber aggregate is of importance for the cleaning sheet of the present invention. The degree is determined by the entanglement energy applied to the fiber web in the entanglement process. In order to obtain a desired degree of entanglement, i.e., to obtain a basis weight and a density of the fiber aggregate both falling within the above-described respective preferred ranges, fiber entanglement by water jet (water needling) is preferable. When the water needling process is followed, the entanglement energy applied to the fiber web can be controlled by appropriate selection of various conditions, such as the kind of the fiber, the basis weight of the fiber web, the number of water jet nozzles, the water jet pressure and the line speed, so that the degree of entanglement among the constituent fibers may be lowered as desired.

It is preferred that the cleaning sheet of the present invention has a breaking strength of 5 N/30mm or higher, an elongation of 20% or lower under a load of 5 N/30mm, and an entanglement coefficient of 0.1 to 5 N·m/g.

The term "breaking strength" as used herein denotes the value of load at which the sheet begins to break when the tensile load is imposed on the cleaning sheet of the present invention (the first peak value in measurement of tensile strength), and the term "elongation" as used herein indicates the percent elongation of the cleaning sheet with the value of load in the above measurement set at 5 N/30mm.

The term "entanglement coefficient" as used herein is a measure indicative of the degree of entanglement among constituent fibers, which is expressed by the initial gradient of the stress-strain curve as measured in the direction perpendicular to the fiber orientation. The smaller the entanglement coefficient, the weaker the degree of entanglement among fibers. The stress is the quotient obtained by dividing the tensile load by a distance between chucks (the width of a test piece in the measurement of tensile strength) and the basis weight of the nonwoven fiber aggregate. The strain corresponds to the elongation.

If the breaking strength is smaller than 5 N/30mm, the cleaning sheet may break during a cleaning operation. The elongation of the cleaning sheet is preferably as low as possible. If the elongation at a load of 5 N/30mm exceeds 20%, the cleaning sheet is liable to distortion or twisting during cleaning, which leads to inconvenience for a cleaning operation. These problems in handling become conspicuous when the cleaning sheet is exchangeably attached to a cleaning tool such as the one described in Japanese Utility Model Laid-Open Application No. 2-119152.

Where the entanglement coefficient of the fiber aggregate, which is expressed by the initial gradient of the stress-strain curve as measured in the direction perpendicular to the fiber orientation, is to be set at 5 N·m/g or less as in the cleaning sheet of the present invention, it will be difficult for the fiber aggregate alone to have the above-mentioned values of breaking strength and elongation. In order to attain these values, it is important that the network sheet and the fiber aggregate are entangled with each other into a unitary body as specified in the present invention. In the present invention, the fibers are markedly prevented from falling off the cleaning sheet as compared with an entangled sheet consisting solely of a fiber aggregate with the degree of entanglement being equally low, because the fiber aggregate is entangled with the network sheet to form a unitary body and the elongation is thereby kept low.

If the entanglement coefficient is smaller than 0.1 N·m/g, the nonwoven fibers tend to fall off due to insufficiently entanglement among the fibers and with the network sheet. If the entanglement coefficient is greater than 5 N·m/g, too strong entanglement lessens the degree of freedom of the fibers, the fibers cannot be easily entangled with dust, and the dust collecting performance is reduced.

In the above-described preferred embodiment of the present invention, the fiber aggregate has a low degree of entanglement allowing the constituent fibers to have such freedom that the fibers are capable of entangling fibrous dust and holding the entangled dust among themselves.

It is preferred that the lubricant be applied to the cleaning sheet in an amount of 0.1 to 40% by weight, particularly 0.5 to 30% by weight, based on the fiber aggregate.

If the amount of the lubricant is less than 0.1% by weight, the effect of the lubricant in improving dust adsorption is insufficient. If it is more than 40% by weight, the lubricant tends to ooze out from the fiber aggregate, migrating to the cleaned surface or adhering to the hand to give stickiness.

The lubricant preferably contains at least one of mineral oils, synthetic oils, silicone oils, and surface active agents.

The mineral oils include paraffinic hydrocarbons, naphthenic hydrocarobons, and aromatic hydrocarbons and the like.

The synthetic oils include alkylbenzene oils, polyolefin oils, polyglycol oils and the like. The silicone oils include acyclic dimethyl polysiloxane, cyclic dimethyl polysiloxane, methylhydrogen polysiloxane, and various modified solicone oils.

The surface active agents include nonionic, cationic, anionic or various kinds of amphoteric surface active agent. Suitable surface active agents are selected appropriately according to the kind of the fiber used in the fiber aggregate or the kind of other lubricants used in combination.

The lubricant preferably has a viscosity of 5 to 1500 mPa·s, particularly 40 to 1300 mPa·s, at 20°C. If the viscosity is lower than 5 mPa·s, the lubricant is apt to ooze out during cleaning. If the viscosity is higher than 1500 mPa·s, the lubricant tends to have poor penetrability into dust, resulting in reduction in dust adsorption.

The present invention will now be illustrated in greater detail with reference to Examples.

EXAMPLE 1

A polypropylene net of a lattice pattern (distance between fibers: 8 mm; fiber diameter: 0.2 mm) was used as a network sheet. A web of polyester fibers (fitness: 0.8 denier; length: 38 mm) having a basis weight of 48 g/m$^2$ which was prepared by carding in a usual manner was overlaid upon each side of the network sheet. The combination of the network sheet and the fiber webs was subjected to water needling under a low energy condition to obtain a unitary sheet in which a nonwoven fiber aggregate formed by entanglement of the fibers constituting the fiber web was combined with each side of the network sheet by entanglement. The resulting sheet had a thickness of 0.9 mm, a breaking strength of 18N/30 mm, an elongation of 5% under a load of 5 N/30mm, and an entanglement coefficient of 0.72 Nm/g, and the density of the fiber aggregate was 0.053 g/cm$^3$. In addition, to the resulting sheet, liquid paraffin (viscosity: 130 mPa·s) was applied in an amount of 5% by weight based on the fiber aggregate of the sheet by gravure coating to thereby obtain a cleaning sheet (see Table 1 below).

EXAMPLE 2

A polypropylene net of a lattice pattern (distance between fibers: 8 mm; fiber diameter: 0.2 mm) was used as a network sheet. A fiber web having a basis weight of 48 g/m$^2$, which was prepared by thoroughly mixing fibers consisting of 70% of polyester fibers (fineness: 0.8 denier, length: 38 mm) and 30% of polyester fibers (fineness: 1.5 denier, length: 51 mm) and carding in a usual manner, was overlaid upon each side of the network sheet. The combination of the network sheet and the fiber webs was subjected to water needling under the same low energy condition as in Example 1 to obtain a unitary sheet in which a nonwoven fiber aggregate formed by entanglement of the fibers constituting the fiber web was combined with each side of the network sheet by entanglement. The resulting sheet had a thickness of 0.9 mm, a breaking strength of 18 N/30mm, an elongation of 5% under a load of 5 N/30mm, and an entanglement coefficient of 0.68 Nm/g, and the density of the fiber aggregates was 0.053g/cm$^3$. In addition, to the resulting sheet, liquid paraffin (viscosity: 130 mPa·s) was applied in an amount of 5% by weight based on the fiber aggregate of the sheet by gravure coating to thereby obtain a cleaning sheet (see Table 1).

COMPARATIVE EXAMPLE 1

A polypropylene net having a square pattern (distance between fibers: 8 mm; fiber diameter: 0.2 mm) was used as a network sheet. A web of polyester fibers (fineness: 1.5 denier; length: 51 mm) having a basis weight of 48 g/m$^2$ which was prepared by carding in a usual manner was overlaid upon each side of the network sheet. The combination of the network sheet and the fiber webs was subjected to water needling with energy low but slightly higher than in Example 1 to obtain a unitary sheet. The resulting sheet (COMPARATIVE EXAMPLE 1) had a thickness of 0.8 mm, a breaking strength of 18 N/30mm, an elongation of 5% under a load of 5 N/30mm, and an entanglement coefficient of 0.70 Nm/g, and the density of the fiber aggregates was 0.060 g/cm$^3$ (see Table 1).

COMPARATIVE EXAMPLE 2

To the sheet of COMPARATIVE EXAMPLE 1, liquid paraffin (viscosity: 130 mPa·s) was applied in an amount of 5% by weight based on the fiber aggregate of the sheet by gravure coating to thereby obtain a cleaning sheet (COMPARATIVE EXAMPLE 2) (see Table 1).

The above-mentioned density of the fiber aggregate is as specified in the following [Density of Fiber Aggregate], and the above-mentioned entanglement coefficient is the value measured in the method mentioned below.

[Density of Fiber Aggregate]

The density of the fiber aggregate is a quotient obtained by dividing the fiber aggregate basis weight by the fiber aggregate thickness. While the "fiber aggregate thickness" as referred to here is the thickness of the entangled unitary sheet excluding the network sheet, the total thickness of the unitary sheet is regarded as the "thickness of the fiber aggregate" where the network sheet is a net of a lattice pattern as shown in Fig. 2. The thickness was measured with Peacock Upright Dial Gauge under a load of 0.68 N/25cm$^2$ (corresponding to 272 Pa).

[Measurement of Entanglement Coefficient]

A 15 mm wide sample was cut out of the nonwoven fiber aggregate of the sheet, from which the network sheet had been removed, in the direction perpendicular to the fiber orientation. The sample was chucked in a tensile tester with a chuck-to-chuck distance of 50 mm and elongated at a rate of 30 mm/min in the direction perpendicular to the fiber orientation to measure the tensile load value with respect to the elongation. The tensile load value F [N] was divided by the sample width [m] and the basis weight W [g/m$^2$] of the nonwoven fiber aggregate to give a stress S [Nm/g], from which a stress-strain (elongation) curve was obtained.

$$\text{Stress } S \text{ [Nm/g]} = (F/0.015)/W$$

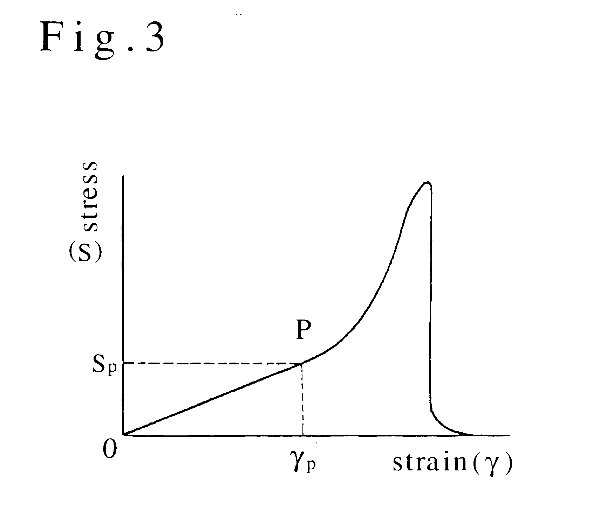

A nonwoven fiber aggregate consisting solely of entangled fibers shows a straight line at the initial stage of the stress-strain curve. The gradient of the straight line was calculated to give the entanglement coefficient E [Nm/g]. For example, in the stress-strain curve shown in Fig. 3, the entanglement coefficient is represented by equation: $E=S_p/\gamma_p$, wherein P is the limit of the linearity, $S_p$ is the stress and $\gamma_p$ is the strain at P. When $S_p$ = 0.60 Nm/g, and $\gamma_p$ = 86%, $E$ = 0.60/0.86= 0.70 Nm/g.

It should be noted that the line OP is not always strictly straight. In such cases, the line OP should be approximated close to a straight line.

TABLE 1

| | | Example 1 | | Example 2 | | Comparative Example 1 | | Comparative Example 2 | |
|---|---|---|---|---|---|---|---|---|---|
| Composition of Fiber Aggregate | | Polyester fiber 0.8 den. 38 mm 100% | | Polyester fiber 0.8 den. 38 mm 70% + 1.5 den. 51 mm 30% | | Polyester fiber 1.5 den. 51 mm 100% | | Polyester fiber 1.5 den. 51 mm 100% | |
| Basis Weight of Fiber Aggregate (g/m$^2$) | | 48 | | 48 | | 48 | | 48 | |
| Entanglement Coefficient (N·m/g) | | 0.72 | | 0.68 | | 0.70 | | 0.70 | |
| Anti-fall-off Properties | | ○ | | ○ | | ○ | | ○ | |
| Amount of Lubricant (%) | | 5 | | 5 | | 0 | | 5 | |
| Hair Collecting Performance | Surface A | 100% | ◎ | 100% | ◎ | 94% | ◎ | 94% | ◎ |
| | Surface B | 85% | ○ | 78% | ○ | 50% | △ | 50% | △ |
| | Surface C | 80% | ○ | 75% | ○ | 30% | X | 30% | X |
| Soil Dust Collecting Performance | | 75% | ○ | 75% | ○ | 25% | X | 75% | ○ |

Surface to be cleaned:

A   Commercially available flooring (Woody Tile MT613T, produced by Matsushita Electric Works, Ltd.; surface roughness (grain direction): 1.95 μm)
B   Commercially available woody flooring (Hirohaba Enko, produced by Matsushita Electric Works, Ltd.; surface roughness (grain direction): 1.07 μm)
C   Veneering (surface roughness: 0.89 μm)

The surface roughness was measured with a surface roughness tester KES-SE System manufactured by Katotech, Inc.

The performance of the cleaning sheet in collecting hairs shown in Table 1 above was measured according to the operations 1 to 3 of the following [Measurement] and evaluated according to the following [Evaluation].

[Measurement]

(1) Five straight hairs (length: 10 cm; diameter: about 100 µm) were scattered on each of the surfaces A, B and C of 30 cm x 30 cm.

(2) The cleaning sheet was attached to a cushioning material having an effective area of 7 cm x 14 cm. The scattered hairs were wiped up with five 30-cm double strokes of the cleaning sheet under a load of 1.96 N.

(3) The number of the hairs firmly caught by the sheet was counted. The hairs clinging to the sheet by static electricity were excluded.

[Evaluation]

The hairs were removed from the sheet, and the operations 1 to 3 were repeated 10 times. The ratio of the total number of collected hairs to the total number of scattered hairs was obtained to make an evaluation according to the following standard.

◎ ... Perfectly acceptable collecting performance
○ ... Almost perfect collecting performance
Δ ... Insufficient collecting performance
✕ ... Substantially no collecting performance

The performance of the cleaning sheet in collecting soil dust shown in Table 1 above was measured according to the operations 4 to 6 of the following [Measurement] and evaluated according to the following [Evaluation].

[Measurement]

(4) JIS sample dust No. 7 was uniformly scattered in an amount of 0.1 g on the surface C of 30 cm x 30 cm.

(5) The cleaning sheet was attached to a cushioning material having an effective area of 7 cm x 14 cm. The scattered soil dust was wiped up with the cleaning sheet under a load of 1.96 N

(6) The amount of dust caught and held by the sheet was measured.

[Evaluation]

The soil dust was removed from the sheet, and the operations 4 to 6 were repeated 5 times. The ratio of the total amount of caught and held dust to the scattered dust was obtained to make an evaluation according to the following standard.

◎ ... Perfectly acceptable collecting performance
○ ... Almost perfect collecting performance
Δ ... Insufficient collecting performance
✕ ... Substantially no collecting performance

It is seen from the results in Table 1 that the cleaning sheets of Examples 1 and 2 exhibit excellent hair collecting performance on any of the surfaces A, B and C, whereas the cleaning sheets of Comparative Examples 1 and 2 show poor hair collecting performance on the smooth surfaces B and C. In addition, the cleaning sheets of Examples 1 and 2 exhibit excellent soil dust collecting performance on the surface C, whereas the cleaning sheet of Comparative Example 1 exhibits poor soil dust collecting performance thereon.

In any of the sheets of Examples 1 and 2 and Comparative Examples 1 and 2, fibers did not fall off (anti-fall-off properties: ○).

# EP 0 872 206 B1

## Claims

1. A cleaning sheet comprising a network sheet having on one side or both sides thereof a nonwoven fiber aggregate characterized in that the aggregate is formed by entanglement of fibers of a fiber web having 50% by weight or more of ultrafine fibers having a fineness of not more than 0.9 denier, said fibers of said nonwoven fiber aggregate being further entangled with said network sheet thereby forming a unitary body, in addition to the entanglement of said fibers themselves.

2. The cleaning sheet according to claim 1, wherein said cleaning sheet has a breaking strength of 5 N/30mm or higher.

3. The cleaning sheet according to claim 1, wherein said cleaning sheet has an elongation at a load of 5 N/30mm of 20% or less.

4. The cleaning sheet according to claim 1, wherein lubricant is contained in an amount of 0.1 to 40% by weight based on said fiber aggregate.

5. The cleaning sheet according to claim 1, wherein said fiber aggregate has a low degree of entanglement allowing the constituent fibers to have such freedom that said fibers are capable of entangling fibrous dust and holding said entangled dust among said constituent fibers.

## Patentansprüche

1. Reinigungsteil, das ein Netzteil, das auf einer oder beiden Seiten eine nichtgewobene Faseransammlung aufweist, umfaßt **dadurch gekennzeichnet**, daß die Ansammlung durch Verflechtung von Fasern eines Fasergewebes mit 50 Gew.-% oder mehr an ultrafeinen Fasern mit einer Feinheit nicht größer als 0,9 Denier, gebildet ist, wobei die Fasern der nichtgewobenen Faseransammlung weiter zusätzlich zu der Verflechtung der Fasern selbst, mit dem Netzteil verflochten sind, wodurch ein unitärer Körper gebildet wird.

2. Reinigungsteil gemäß Anspruch 1, wobei das Reinigungsteil eine Reißfestigkeit von 5 N/30 mm oder mehr aufweist.

3. Reinigungsteil gemäß Anspruch 1, wobei das Reinigungsteil eine Ausdehnung bei einer Last von 5 N/30 mm von 20 % oder weniger aufweist.

4. Reinigungsteil gemäß Anspruch 1, wobei eine Menge von 0,1 bis 40 Gew.-% in bezug auf die Faseransammlung an Schmiermittel enthalten ist.

5. Reinigungsteil gemäß Anspruch 1, wobei die Faseransammlung einen niedrigen Verflechtungsgrad aufweist, so daß gewährleistet ist, daß die Faserkomponenten solch einen Freiheitsgrad haben, daß die Fasern fasrigen Staub verflechten können und den verflochtenen Staub unter den Faserkomponenten halten können.

## Revendications

1. Feuille de nettoyage comprenant une feuille formant un réseau ayant, sur un de ses côtés ou sur ses deux côtés, un agrégat de fibres non tissées, caractérisée en ce que l'agrégat est formé par l'enchevêtrement de fibres d'une nappe de fibres comprenant 50 % en poids ou plus de fibres ultrafines ayant une finesse qui n'est pas supérieure à 0,9 denier, lesdites fibres dudit agrégat de fibres non tissées étant, en outre, enchevêtrées avec ladite feuille formant un réseau de manière à former un corps unitaire, en plus de l'enchevêtrement desdites fibres entre elles.

2. Feuille de nettoyage selon la revendication 1, dans laquelle ladite feuille de nettoyage a une résistance à la rupture de 5 N/30 mm ou plus.

3. Feuille de nettoyage selon la revendication 1, dans laquelle ladite feuille de nettoyage a un allongement à une charge de 5 N/30 mm de 20 % ou moins.

4. Feuille de nettoyage selon la revendication 1, dans laquelle un lubrifiant est contenu en une quantité de 0,1 à 40 % en poids, sur la base dudit agrégat de fibres.

5. Feuille de nettoyage selon la revendication 1, dans laquelle ledit agrégat de fibres présente un faible degré d'enchevêtrement permettant aux fibres qui le constituent d'avoir une liberté suffisante pour que lesdites fibres puissent s'enchevêtrer avec de la poussière fibreuse et retenir ladite poussière fibreuse parmi lesdites fibres qui le constituent.

Fig.1

Fig.2

# Fig.3